# EUROPÄISCHE PATENTANMELDUNG

(11) **EP 1 978 178 A2**
(43) Veröffentlichungstag der Anmeldung: **08.10.2008**
(21) Anmeldenummer: 08154161.7
(22) Anmeldetag: 07.04.2008
(51) Int. Cl.: E04F 13/10, E04F 15/02

(54) **Paneelverbinder-Koppelsystem**

(30) Priorität: 05.04.2007 DE 102007016797
(71) Anmelder: Procédés Chénel Beilken Digital Printing Werbeges mbH, 27809 Lemwerder (DE)
(72) Erfinder:
(74) Vertreter: Sendrowski, Heiko

(57) **Zusammenfassung**

Die vorliegende Erfindung betrifft Koppelsysteme umfassend oder bestehend aus zwei Paneelverbindern (82,84), wobei die Paneelverbinder jeweils eine erste (10) und eine zweite (12) Seitenfläche, eine erste (14) und eine zweite (16) Oberfläche sowie mindestens eine Durchgangsbohrung (20,22,24) und eine zur ersten Seitenfläche abfallende Fläche (18) aufweisen.

## Beschreibung

Die vorliegende Erfindung betrifft Koppelsysteme umfassend oder bestehend aus zwei Paneelverbindern. Die vorliegende Erfindung betrifft weiterhin einen Bausatz für Paneele umfassend oder bestehend aus einem Paneelrahmen und Paneelverbindern sowie eine Paneelzusammenstellung umfassend oder bestehend aus zwei Paneelen mit Paneelrahmen und Paneelverbindern.

Paneelverbindungen sind im Stand der Technik bekannt. Die DE 10 2004 033 458 A1 beschreibt eine Einrichtung zum Verbinden von Baumitteln, insbesondere Koppelmittel für Paneele. Hierbei werden Paneele mittels Nut-Feder-Verbindungen verbunden, wobei die Nut-Feder-Verbindung mit einem Rastmittel lösbar verriegelt wird. Die zu verbindenden Paneele dienen zur Verkleidung von Wand- und Deckenflächen sowie Fußböden im Innen- und Außenbereich.

Zwar können derartige Paneelverbindungen zerstörungsfrei gelöst werden, jedoch ist die Montage aufwendig, so dass sich solche Paneelverbindungen nicht für Paneele eignen, die mehrfach montiert und demontiert werden müssen, wie es beispielsweise bei Messeständen oder anderen temporären Bauten der Fall ist.

Der Erfindung liegt daher die Aufgabe zugrunde, ein Koppelsystem mit Paneelverbindungen anzugeben, welche die Nachteile des Standes der Technik minimiert und zudem unauffällig und optisch ansprechend ist.

Ein erfindungsgemäßes erstes Koppelsystem der eingangs genannten Art löst die Aufgabe dadurch, dass das Koppelsystem
- einen ersten Paneelverbinder
und
- einen zweiten Paneelverbinder
umfasst oder daraus besteht,
wobei die Paneelverbinder jeweils eine erste und eine zweite Seitenfläche, eine erste Oberfläche und eine zweite Oberfläche sowie mindestens eine Durchgangsbohrung und eine zur ersten Seitenfläche abfallende Fläche aufweisen,
dadurch gekennzeichnet, dass
der erste Paneelverbinder zwei Symmetrieebenen, eine weitere abfallende Fläche, fünf Durchgangsbohrungen und eine konzentrisch zur Schnittachse der ersten und der zweiten Symmetrieebene verlaufende und von der ersten Oberfläche ausgehende Ausnehmung aufweist, die sich über die gesamte Breite des ersten Paneelverbinders erstreckt,
der zweite Paneelverbinder eine erste und eine zweite Oberfläche sowie eine Ausnehmung aufweist, welche sich von der ersten Seitenfläche in Richtung einer zweiten Seitenfläche über die gesamte Breite des zweiten Paneelverbinders erstreckt und von der zweiten Oberfläche ausgeht,
jeweils eine der Durchgangsbohrungen als Gewindebohrung ausgeführt ist,
und
die Ausnehmung des ersten Paneelverbinders zur Ausnehmung des zweiten Paneelverbinders komplementär ist, die Oberflächen des ersten Paneelverbinders mit den Oberflächen des zweiten Paneelverbinders beim Verbinden der Paneelverbinder über die Ausnehmungen fluchten, die Ausnehmung des zweiten Paneelverbinders eine Auflagefläche für Paneelrahmen bildet und die Paneelverbinder mittels einer Schraube oder Gewindestange, welche in die Gewindelöcher einschraubbar sind, verbindbar sind. Dieses erste Koppelsystem ermöglicht es, drei Paneelrahmen miteinander zu verbinden, die dann einen im Wesentlichen T-förmigen Knotenpunkt bilden.

In einer vorteilhaften Ausbildung der Erfindung zeichnet sich ein zweites Koppelsystem dadurch aus, dass das Koppelsystem
- einen ersten Paneelverbinder
   und
- einen dritten Paneelverbinder
umfasst oder daraus besteht,
wobei die Paneelverbinder jeweils eine erste und eine zweite Seitenfläche, eine erste Oberfläche und eine zweite Oberfläche sowie mindestens eine Durchgangsbohrung und eine zur ersten Seitenfläche abfallende Fläche aufweisen,
dadurch gekennzeichnet, dass
der erste Paneelverbinder zwei Symmetrieebenen, eine weitere abfallende Fläche, fünf Durchgangsbohrungen und eine konzentrisch zur Schnittachse der ersten und der zweiten Symmetrieebene verlaufende und von der ersten Oberfläche ausgehende Ausnehmung aufweist, die sich über die gesamte Breite des ersten Paneelverbinders erstreckt,
der dritte Paneelverbinder zwei abfallende Flächen, zwei Seitenflächen, vier Durchgangsbohrungen, eine erste und eine zweite Oberfläche sowie eine Ausnehmung aufweist, die sich über die gesamte Breite des dritten Paneelverbinders erstreckt und an die erste Oberfläche angrenzt,
jeweils eine der Durchgangsbohrungen als Gewindebohrung ausgeführt ist,
und
die Ausnehmung des ersten Paneelverbinders komplementär zur Ausnehmung des dritten Paneelverbinders ist, die Oberflächen des ersten Paneelverbinders mit den Oberflächen des dritten Paneelverbinders beim Verbinden der Paneelverbinder über die Ausnehmungen fluchten, die Ausnehmung des dritten Paneelverbinders zwei Auflageflächen für Paneelrahmen bildet und die Paneelverbinder mittels einer Schraube oder Gewindestange, welche in die Gewindelöcher einschraubbar sind, verbindbar sind. Dieses zweite Koppelsystem ermöglicht es, vier Paneelrahmen miteinander zu verbinden, die dann einen im Wesentlichen X-förmigen Knotenpunkt bilden.

Ein erster Paneelverbinder eines vorangehend beschriebenen Koppelsystems weist vorzugsweise eine zweite Symmetrieebene, zwei abfallende Flächen und fünf Durchgangslöcher auf. Diese Ausführungsform eignet sich insbesondere zum Verbinden von zwei Paneelrahmen gleicher Ausrichtung.

In einer vorteilhaften Weiterbildung der Erfindung zeichnet sich ein drittes Koppelsystem dadurch aus, das Koppelsystem
- einen vierten Paneelverbinder
   und
- einen fünften Paneelverbinder
umfasst oder daraus besteht,
wobei die Paneelverbinder jeweils eine erste und eine zweite Seitenfläche, eine erste Oberfläche und eine zweite Oberfläche sowie mindestens eine Durchgangsbohrung und eine zur ersten Seitenfläche abfallende Fläche aufweisen,
dadurch gekennzeichnet, dass
der vierte Paneelverbinder eine erste und eine zweite Oberfläche sowie eine Ausnehmung aufweist, welche sich über die gesamte Breite des vierten Paneelverbinders erstreckt und an die erste Oberfläche angrenzt,
der fünfte Paneelverbinder eine erste und eine zweite Oberfläche sowie eine Ausnehmung aufweist, welche sich über die gesamte Breite (b) des fünften Paneelverbinders erstreckt und an die zweite Oberfläche angrenzt
jeweils eine der Durchgangsbohrungen als Gewindebohrung ausgeführt ist,
und
die Ausnehmung des vierten Paneelverbinders komplementär zur Ausnehmung des fünften Paneelverbinders ist, die Oberflächen des vierten Paneelverbinders mit den Oberflächen des fünften Paneelverbinders beim Verbinden der Paneelverbinder über die Ausnehmungen fluchten, die Paneelverbinder einen Winkel von 0 bis 180°, insbesondere 90°, einschließen und mittels einer Schraube oder Gewindestange, welche in die Gewindelöcher einschraubbar sind, verbindbar sind. Dieses dritte Koppelsystem ermöglicht es, zwei Paneelrahmen miteinander zu verbinden, die in einem beliebigen Winkel zueinander stehen können.

Der bzw. die Paneelverbinder weisen vorzugsweise eine zur ersten Seitenfläche abfallende Fläche auf. Auf diese Weise kann Material eingespart und eine filigranere, optisch ansprechendere Form des Paneelverbinders verwirklicht werden, ohne die Festigkeit des Paneelverbinders wesentlich herabzusetzen.

Zudem ist eine der Durchgangsbohrungen als Gewindebohrung ausgeführt. Es können daher eine Vielzahl von Elementen mit dem Paneelverbinder auf einfache Weise lösbar verbunden werden.

Weiterhin ist bevorzugt, wenn die Durchgangsbohrung(en) Längsachse(n) aufweist bzw. aufweisen und die Längsachse(n) entlang einer ersten Symmetrieebene verläuft bzw. verlaufen. Demnach betrifft die vorliegende Erfindung auch ein wie oben beschriebenes Koppelsystem, dadurch gekennzeichnet, dass die Durchgangsbohrung(en) des einen oder beider Paneelverbinder Längsachse(n) aufweist oder aufweisen und die Längsachse(n) entlang einer ersten Symmetrieebene verläuft bzw. verlaufen.

Ferner ist es vorteilhaft, wenn die Längsachsen der Durchgangsbohrungen senkrecht zur zweiten Oberfläche verlaufen. Demnach ist ein wie oben beschriebenes Koppelsystem vorzugsweise dadurch gekennzeichnet, dass die Längsachsen der Durchgangsbohrungen des einen oder beider Paneelverbinder senkrecht zur zweiten Oberfläche verlaufen. Mit dieser Anordnung wird sichergestellt, dass an den Durchgangsbohrungen angreifende Kräfte möglichst gleichmäßig in den Paneelverbinder eingeleitet werden. Weiterhin erleichtert diese Anordnung die Herstellung der Bohrung, da hierbei das Werkzeug bzw. der Paneelverbinder nur entlang einer Richtung verschoben werden muss.

Vorzugsweise befindet sich eine der Durchgangsbohrung auf der abfallenden Fläche. Ein wie oben beschriebenes Koppelsystem ist weiter daher weiter bevorzugt dadurch gekennzeichnet, dass sich eine der Durchgangsbohrungen des einen oder beider Paneelverbinder auf der abfallenden Fläche befindet. Es wird somit ermöglicht, auch diesen Teil des Paneelverbinders funktionell zu nutzen.

In einer vorteilhaften Weiterbildung der Erfindung weist die sich auf der abfallenden Fläche befindende Durchgangsbohrung des einen oder beider Panelverbinder eines wie oben beschriebenen Koppelsystems eine Absenkung auf, die sich an die abfallende Fläche anschließt, und die von der zweiten Oberfläche ausgehende Durchgangsbohrung eine Erweiterung aufweist, welche sich an die zweite Oberfläche anschließt.

Weiterhin bevorzugt ist es, wenn die Gewindebohrung eines Panelverbinders, d.h. des einen oder beider Panelverbinder eines erfindungsgemäßen Koppelsystems, eine Absenkung aufweist, die sich an die erste Oberfläche anschließt. Mit Hilfe der Absenkung können Schrauben komplett in den Paneelverbinder versenkt werden. Die Erweiterung der anderen Durchgangsbohrung hat den Vorteil, dass das Einführen von Stiften, Bolzen oder dergleichen vereinfacht und das Material des Paneelverbinders geschont wird.

Der oben beschriebene erste Paneelverbinder zeichnet sich weiterhin vorzugsweise dadurch aus, dass die Längsachse der Gewindebohrung entlang einer Schnittachse der beiden Symmetrieebenen verläuft. Die Gewindebohrung verläuft also durch den Schwerpunkt des Paneelverbinders, wodurch gewährleistet ist, dass Kräfte, die an mit der Gewindebohrung verschraubten Gewindestangen oder Schrauben angreifen, gleichmäßig in den Paneelverbinder eingeleitet werden. Somit wird dieser gleichmäßig belastet, was die Gefahr eines Versagens verringert.

Ferner ist bevorzugt, dass bei dieser Ausführungsform die sich auf der ersten Oberfläche befindlichen Durchgangsbohrungen und die sich auf den abfallenden Flächen befindlichen Durchgangsbohrungen jeweils denselben Abstand von der zweiten Symmetrieebene aufweisen und die sich auf der abfallenden Fläche befindende Durchgangsbohrung des einen oder beider Panelverbinder eines wie oben beschriebenen Koppelsystems eine Absenkung aufweist, die sich an die abfallende Fläche anschließt, und die von der zweiten Oberfläche ausgehende Durchgangsbohrung eine Erweiterung aufweist, welche sich an die zweite Oberfläche anschließt. Die symmetrische Anordnung der Durchgangslöcher stellt ebenfalls sicher, dass der Paneelverbinder möglichst gleichmäßig belastet wird.

Wie vorangehend erwähnt, weist der erste Paneelverbinder eine konzentrisch zur Schnittachse der ersten und der zweiten Symmetrieebene verlaufende und von der ersten Oberfläche ausgehende Ausnehmung auf, die sich über die gesamte Breite des ersten Paneelverbinders erstreckt. Die Ausnehmung dient dazu, den ersten Paneelverbinder mit anderen Paneelverbindern, welche komplementäre Ausnehmungen aufweisen, zu verbinden.

Der zweite Paneelverbinder weist eine erste und eine zweite Oberfläche sowie eine Ausnehmung auf, welche sich von der ersten Seitenfläche in Richtung einer zweiten Seitenfläche über die gesamte Breite des zweiten Paneelverbinders erstreckt und von der zweiten Oberfläche ausgeht.

Wie oben beschrieben, zeichnet sich der dritte Paneelverbinder dadurch aus, dass er zwei abfallende Flächen, zwei Seitenflächen, vier Durchgangsbohrungen, eine erste und eine zweite Oberfläche sowie eine Gewindebohrung und eine Ausnehmung aufweist, die sich über die gesamte Breite des Paneelverbinders erstreckt und an die erste Oberfläche angrenzt.

Der vierte Paneelverbinder zeichnet sich dadurch aus, dass er eine erste und eine zweite Oberfläche sowie eine Ausnehmung aufweist, welche sich über die gesamte Breite des Paneelverbinders erstreckt und an der ersten Oberfläche angrenzt.

Der fünfte Paneelverbinder zeichnet sich dadurch aus, dass er eine erste und eine zweite Oberfläche sowie eine Ausnehmung aufweist, welche sich über die gesamte Breite des Paneelverbinders erstreckt und an eine Oberfläche angrenzt.

Ein weiterer Aspekt der vorliegenden Erfindung betrifft einen Bausatz für Paneele umfassend oder bestehend aus
a) einem Paneelrahmen und
b)
   - einem ersten und einem zweiten Paneelverbinder für ein Koppelsystem (wie oben beschrieben), und/oder
   - einem ersten und einem dritten Paneelverbinder für ein Koppelsystem (wie oben beschrieben), und/oder
   - einem vierten und einem fünften Paneelverbinder für ein Koppelsystem (wie oben beschrieben),
dadurch gekennzeichnet, dass der Paneelrahmen eine Ausnehmung aufweist, in welche ein erster, zweiter, dritter, vierter oder fünfter Paneelverbinder einsetzbar ist.

Die Ausnehmung kann sich über den gesamten Paneelrahmen erstrecken. Alternativ kann sie sich von den Enden des Paneelrahmens ausgehend auch nur soweit erstrecken, dass der Paneelverbinder so in die Ausnehmung einsetzbar ist, dass er seine Funktion wahrnehmen kann. Die Breite der Ausnehmung ist vorzugsweise so bemessen, dass ihre Seitenflächen mit denen des Paneelverbinders in Kontakt stehen und diesen führen. Der Querschnitt der Ausnehmung ist vorzugsweise U-förmig, es sind aber auch anders geformte Querschnitte, etwa in Kreis- oder Halbkreisform denkbar. Die Querschnitte können geschlossen oder offen sein.

Vorteilhafterweise umfasst der erfindungsgemäße Bausatz auch einen Zapfen, bei dem die Durchgangsbohrung eine Längsachse aufweist, welche innerhalb einer ersten Symmetrieebene des Grundkörpers und senkrecht zur ersten Oberfläche verläuft, die Stange eine Längsachse aufweist, die innerhalb der ersten Symmetrieebene des Quaders und senkrecht zur ersten Seitenfläche verläuft, und der Zapfen mittels der Stange und den Durchgangslöchern mit den Paneelverbindern form- oder reibschlüssig verbindbar ist. Dieser Zapfen ermöglicht es, den Paneelverbinder mit dem Paneelrahmen auf zuverlässige Weise so zu verbinden, dass der Paneelverbinder etwas über den Paneelrahmen übersteht, wie es dann der Fall ist, wenn kein weiterer Paneelrahmen in Längsrichtung verbunden ist. Durch die Anordnung der Bohrungen steht die Gewindebohrung des Paneelverbinders etwas vom Paneelrahmen ab. Es wird somit ein neuer Anschluss geschaffen, der zum Verbinden von weiteren Elementen wie z.B. Türen nutzbar ist.

Vorteilhaft wird der erfindungsgemäße Bausatz dadurch weitergebildet, dass der Bausatz weiterhin Profile zur Versteifung und/oder zur Aufnahme weiterer Bausatzelemente wie Rollos, Lamellen, Stoffen oder Türelemente umfasst und dass die Profile an den Paneelverbindern und/oder an den Koppelsystemen befestigbar sind. Der Bausatz ermöglicht daher eine flexible Gestaltung beispielsweise eines Messestandes oder anderen temporären Bauten.

Gemäß einem weiteren Aspekt der vorliegenden Erfindung wird eine Paneelzusammenstellung angegeben, umfassend oder bestehend aus zwei Paneelen mit Paneelrahmen sowie jeweils
- einem ersten und einem zweiten Paneelverbinder für ein Koppelsystem (wie oben beschrieben), und/oder
- einem ersten und einem dritten Paneelverbinder für ein Koppelsystem (wie oben beschrieben), und/oder
- einem vierten und einem fünften Paneelverbinder für ein Koppelsystem (wie oben beschrieben),
wobei der Paneelrahmen eine Ausnehmung aufweist, in welche ein erster, zweiter, dritter, vierter oder fünfter Paneelverbinder einsetzbar ist,
und wobei die zwei Paneelen durch ein oben beschriebenes erfindungsgemäßes Koppelsystem verbunden sind.

Die Erfindung wird nachfolgend anhand der beigefügten Figuren beispielhaft näher erläutert. Es stellen dar:
- Fig. 1: eine Draufsicht und eine Seitenansicht eines Grundkörpers der erfindungsgemäßen Paneelverbinder,
- Fig. 2: eine perspektivische Ansicht, eine Seitenansicht sowie eine Draufsicht eines Paneelverbinders,
- Fig. 3: je eine Seitenansicht eines ersten und eines zweiten Paneelverbinders sowie eine perspektivische Ansicht und eine Draufsicht des ersten und des zweiten Paneelverbinders im gekoppelten Zustand,
- Fig. 4: je eine Seitenansicht eines ersten und eines dritten Paneelverbinders sowie eine Draufsicht und eine perspektivische Ansicht des ersten und des dritten Paneelverbinders im gekoppelten Zustand,
- Fig. 5: je eine Seitenansicht eines vierten und eines fünften Paneelverbinders sowie eine perspektivische Ansicht und eine Draufsicht des vierten und des fünften Paneelverbinders im gekoppelten Zustand,
- Fig. 6: eine perspektivische und zwei Seitenansichten eines Zapfens sowie eine perspektivische Darstellung des Zapfens während der Montage.

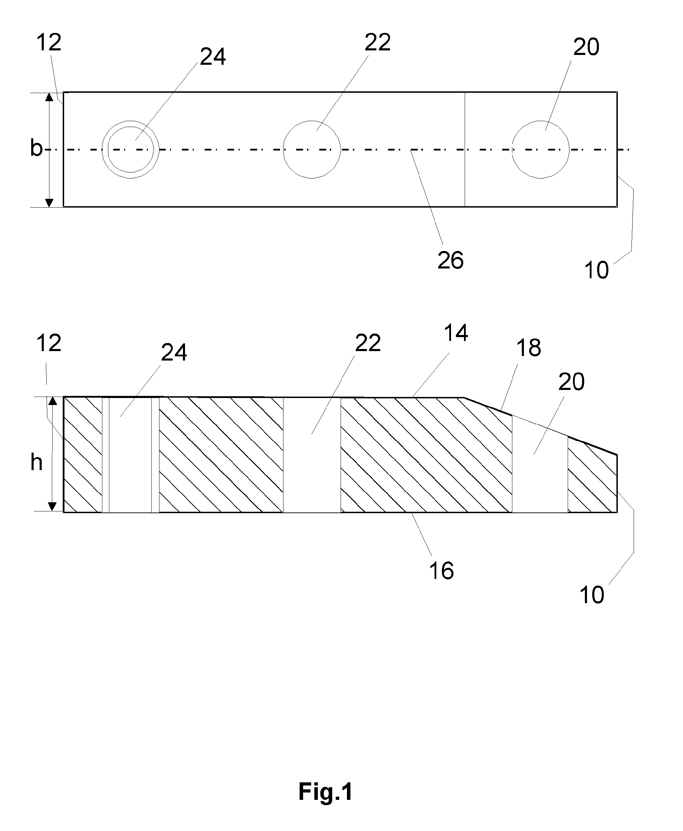

In Fig. 1 ist ein Grundkörper der erfindungsgemäßen Paneelverbinder in einer Draufsicht und in einer Seitenansicht dargestellt. Der Grundkörper ist im Wesentlichen quaderförmig und besitzt eine erste und eine zweite Seitenfläche 10, 12 sowie eine erste und eine zweite Oberfläche 14, 16. Zwischen der ersten Seitenfläche 10 und der ersten Oberfläche 14 erstreckt sich eine zur ersten Seitenfläche 10 abfallende Fläche 18. Der Grundkörper weist eine Symmetrieebene 26 und weiterhin drei Durchgangsbohrungen 20, 22, 24 auf. Die Längsachsen der Durchgangsbohrungen 20, 22, 24 verlaufen entlang der Symmetrieebene 26 und senkrecht zur zweiten Oberfläche 16. Die Durchgangsbohrung 20 ist so positioniert, dass sich ein Ende in der abfallenden Fläche 18 befindet. Die Durchgangsbohrung 20 weist eine hier nicht dargestellte Versenkung auf, so dass Schrauben, die einen konischen Schraubenkopf haben, vollständig in der Durchgangsbohrung 20 versenkt werden können. Die Durchgangsbohrungen 22 und 24 verlaufen so, dass sich je ein freies Ende in der ersten Oberfläche 14 befindet. Die Durchgangsbohrung 24 ist als Gewindebohrung ausgeführt.

Sämtliche im Folgenden beschriebenen Paneelverbinder bauen auf diesem Grundkörper auf. Insbesondere besitzen sie dieselbe Breite b und dieselbe Höhe h wie der Grundkörper. Ferner ist die abfallende Fläche 18 bei allen Paneelverbindern gleich aufgebaut und umfasst die Durchgangsbohrung 20.

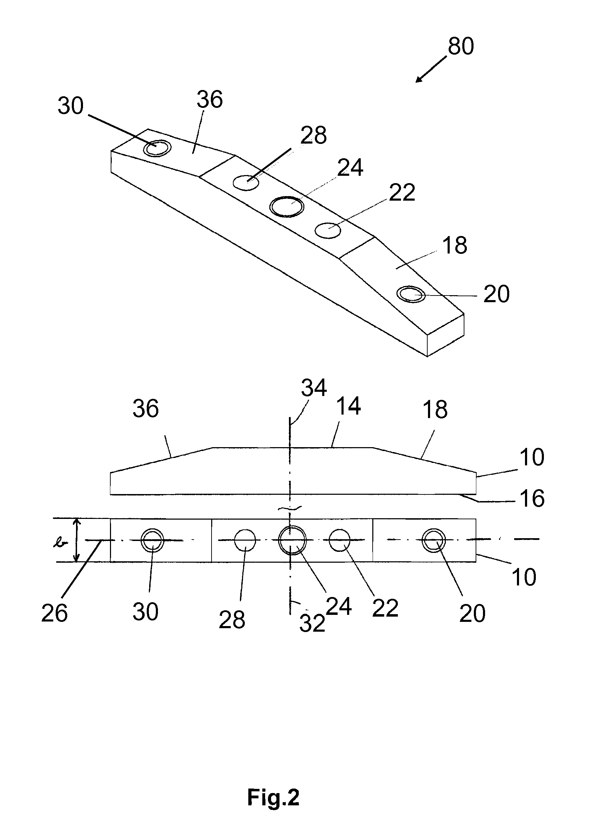

In Fig. 2 ist ein Paneelverbinder 80 dargestellt. Er weist Durchgangsbohrungen 20, 22, 24, 28 und 30, eine erste und eine zweite Oberfläche 14 und 16, sowie abfallende Flächen 18 und 36 auf, wobei die Durchgangsbohrungen 20, 22, 24 und die abfallende Fläche 18 in ihren Eigenschaften identisch mit den oben beschriebenen Durchgangsbohrungen 20, 22, 24 bzw. mit der oben beschriebenen abfallenden Fläche 18 sind. Neben der Symmetrieebene 26 weist der Paneelverbinder 80 weiterhin eine zweite Symmetrieebene 32 auf. Die beiden Symmetrieebenen 26 und 32 bilden eine Schnittachse 34, die mit der Längsachse der Gewindebohrung 24 zusammenfällt. Die Symmetrie, welche durch die Symmetrieebene 32 begründet wird, hat zur Folge, dass die abfallenden Flächen 18 und 36 und die Bohrungen 20 und 30 in ihren Eigenschaften identisch sind. Dasselbe gilt für die Bohrungen 22 und 28.

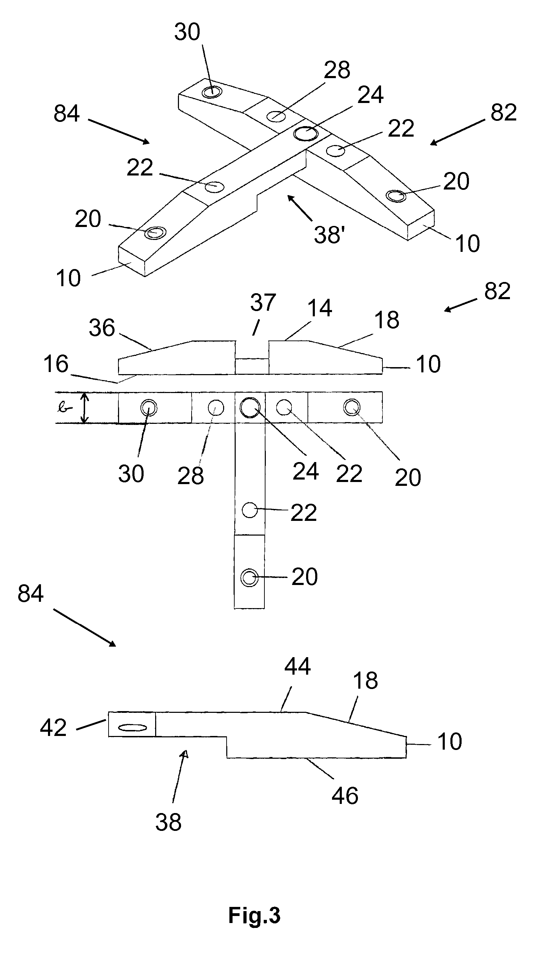

Aus Fig. 3 sind ein erster Paneelverbinder 82 und ein zweiter Paneelverbinder 84 zu entnehmen. Der erste Paneelverbinder 82 weist im Wesentlichen dieselben Merkmale wie der in Fig. 2 gezeigte Paneelverbinder 80 auf, jedoch besitzt er zusätzlich eine Ausnehmung 37. Die Ausnehmung 37 erstreckt sich über die gesamte Breite b des ersten Paneelverbinders 82 und schließt sich der ersten Oberfläche 14 an. Die Länge der Ausnehmung 37 entspricht der Breite b. Die Ausnehmung 37 umschließt einen quaderförmigen Volumenbereich und ordnet sich der Symmetrie des ersten Paneelverbinders 82 unter, d.h. die Achse, welche die beiden Schnittpunkte der oberen und der unteren Flächendiagonalen des Quaders verbindet, fällt mit der Symmetrieachse 34 zusammen (vgl. Fig. 2).

Der zweite Paneelverbinder 84 weist eine erste Oberfläche 44 und eine zweite Oberfläche 46 sowie eine Ausnehmung 38 auf, die sich in Richtung einer Fläche 42 über die gesamte Breite des zweiten Paneelverbinders 84 erstreckt und sich an die zweite Oberfläche 46 anschließt. Die Ausnehmung 38 ist allerdings länger als dass sie breit ist.

In Fig. 3 sind der erste Paneelverbinder 82 und der zweite Paneelverbinder 84 auch im gekoppelten Zustand dargestellt. Hierzu werden sie mit Hilfe einer Schraube oder einer Gewindestange, welche in die Gewindebohrung 24 einschraubbar sind, verbunden. Die Ausnehmungen 37, 38 sind komplementär zueinander, so dass die erste Oberfläche 14 des ersten Paneelverbinders 82 und die erste Oberfläche 44 des zweiten Paneelverbinders 84 im gekoppelten Zustand miteinander fluchten. Weiterhin schließt die Fläche 42 des zweiten Paneelverbinders 84 bündig mit dem ersten Paneelverbinder 82 ab, so dass ein T-förmiger Verbindungsknoten entsteht. Dadurch, dass die Ausnehmung 38 des zweiten Paneelverbinders 84 länger als breit ist, bildet sie im gekoppelten Zustand eine Vertiefung 38'. Diese kann als Auflagefläche für Paneelrahmen benutzt werden.

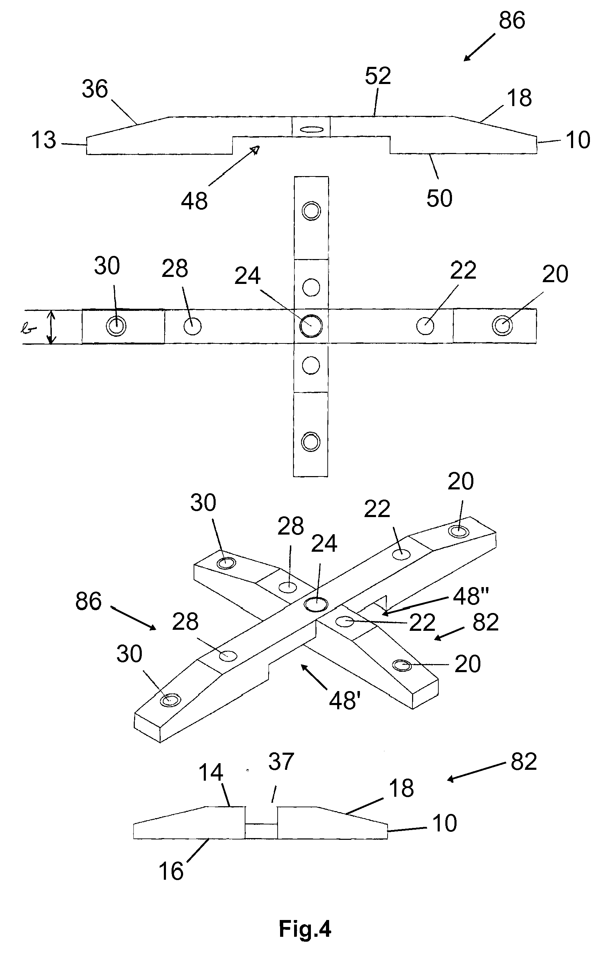

In Fig. 4 sind der erste Paneelverbinder 82 und ein dritter Paneelverbinder 86 dargestellt. Der dritte Paneelverbinder 86 weist eine erste Oberfläche 50 und eine zweite Oberfläche 52 sowie eine Ausnehmung 48 auf, welche sich über die gesamte Breite b des dritten Paneelverbinders 86 erstreckt, allerdings länger als breit ist.

In Fig. 4 sind der erste Paneelverbinder 82 und der dritte Paneelverbinder 86 auch im gekoppelten Zustand dargestellt. Hierzu werden sie mit Hilfe einer Schraube oder einer Gewindestange, welche in die Gewindebohrung 24 einschraubbar sind, verbunden. Die Ausnehmungen sind komplementär zueinander, so dass die erste Oberfläche 14 des ersten Paneelverbinders 82 und die erste Oberfläche 52 des dritten Paneelverbinders 86 im gekoppelten Zustand miteinander fluchten und ein X-förmiger Verbindungsknoten entsteht. Dadurch, dass die Ausnehmung 48 des dritten Paneelverbinders 86 länger als breit ist, bildet sie im gekoppelten Zustand zwei Vertiefungen 48' und 48". Diese können als Auflagefläche für Paneelrahmen benutzt werden.

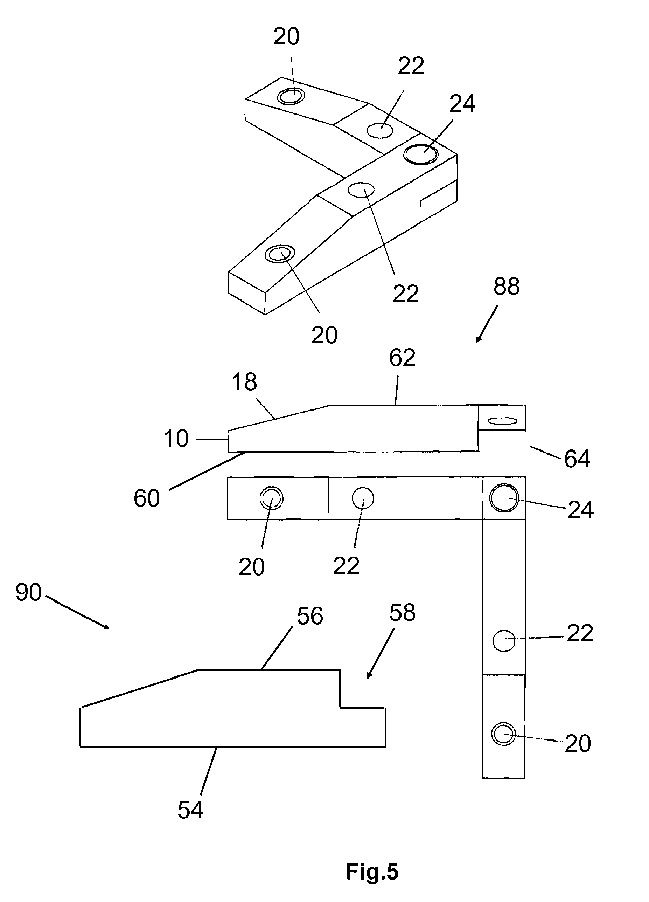

Aus Fig. 5 sind ein vierter Paneelverbinder 88 und ein fünfter Paneelverbinder 90 zu entnehmen. Der vierte Paneelverbinder 88 weist eine erste Oberfläche 60 und eine zweite Oberfläche 62 auf und bildet eine Ausnehmung 64, welche sich von der ersten Oberfläche 60 aus über die gesamte Breite b des vierten Paneelverbinders 88 erstreckt. Der fünfte Paneelverbinder 90 umfasst eine erste Oberfläche 54 und eine zweite Oberfläche 56 und bildet eine Ausnehmung 58, welche sich von der zweiten Oberfläche 56 aus über die gesamte Breite b des fünften Paneelverbinders 90 erstreckt.

In Fig. 5 sind der vierte und der fünfte Paneelverbinder 88 und 90 auch im gekoppelten Zustand dargestellt. Hierzu werden die Paneelverbinder 88 und 90 über eine Gewindestange oder eine Schraube, welche in die Gewindebohrung 24 einschraubbar sind, miteinander verbunden. Die Ausnehmungen 58 und 64 sind komplementär zueinander, so dass im gekoppelten Zustand die zweite Oberfläche 62 des vierten Paneelverbinders 88 und die zweite Oberfläche 56 des fünften Paneelverbinders 90 miteinander fluchten. Es entsteht ein L-förmiger Verbindungsknoten.

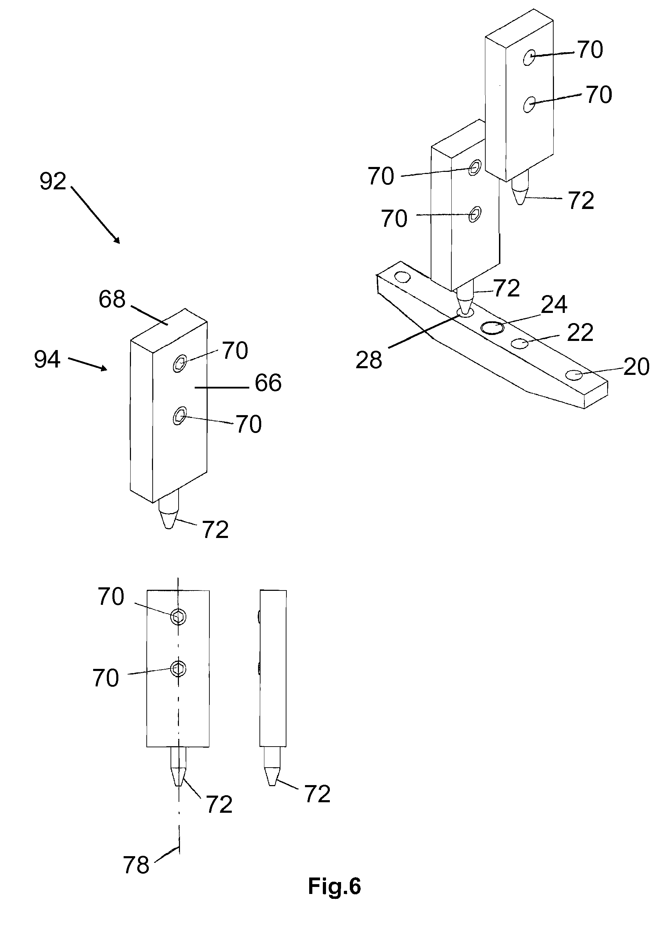

In Fig. 6 ist ein Zapfen 92 dargestellt, welcher aus einem im Wesentlichen quaderförmigen Grundkörper 94 besteht, der eine erste Oberfläche 66 und eine erste Seitenfläche 68 aufweist. Der quaderförmige Grundkörper 94 umfasst mindestens eine Durchgangsbohrung 70, deren Längsachse innerhalb einer Symmetrieebene 78 des quaderförmigen Grundkörpers 94 und senkrecht zur ersten Oberfläche 66 verläuft. Mit Hilfe der Durchgangsbohrung 70 kann der Zapfen 92 mit einem Paneelrahmen lösbar verbunden werden. Darüber hinaus weist der Zapfen 92 eine Stange 72 auf, deren Längsachse innerhalb der Symmetrieebene 78 und senkrecht zur ersten Seitenfläche 68 verläuft. In einer nicht dargestellten Ausführungsform weist der Grundkörper 94 Ausnehmungen auf, welche parallel zur Stange 72 beispielsweise auf der ersten Oberfläche 66 über die gesamte Länge des Grundkörpers verlaufen. Die Stange 72 weist einen konischen Abschluss auf und ist über die Durchgangslöcher 22 und 28 mit den Paneelverbindern 80, 82, 84, 86, 88 und 90 form- oder reibschlüssig verbindbar.

Mit dem erfindungsgemäßen Bausatz, welcher Paneelrahmen und die hier dargestellten Paneelverbinder und vorzugsweise Zapfen umfasst, werden Koppelsysteme geschaffen, mit denen Paneelrahmen schnell und auf optisch ansprechende Weise verbunden werden können. Weiterhin können durch die Paneelverbinder noch weitere Elemente, wie zum Beispiel Türen, Lamellen oder Rollos an die Paneelrahmen angebracht werden.

Die Erfindung ist nicht auf die hier dargestellten Beispiele beschränkt. Der beanspruchte Schutzbereich umfasst auch alle möglichen Variationen und Abwandlungen, die sich aus dem Grundgedanken ergeben, welcher der vorliegenden Erfindung zugrunde liegt. Es könnten Koppelsysteme geschaffen werden, die Knotenpunkte entstehen lassen, über die sich Paneelrahmen auch in die dritte Dimension verbinden lassen. Weiterhin könnten die Koppelsysteme von vorne herein als ein Bauteil ausgebildet sein, so dass die einzelnen Paneelverbinder nicht miteinander über entsprechende Ausnehmungen und Verbindungselemente miteinander verbunden werden müssen. Weiterhin könnte der Bausatz auch Elemente umfassen, die derart ausgestaltet sind, dass sie als Einhängebeschläge zur formschlüssigen Verbindung weiterer Elemente verwendet werden können. Ebenfalls denkbar wären Stellfüße, die eine Grundplatte und eine daran befestigte Gewindestange aufweisen, über welche die Paneelverbinder miteinander gekoppelt werden können.

Derartige Variationen und Abwandlungen gehen nicht über den Grundgedanken der vorliegenden Erfindung hinaus.

### Weitere Ausführungsbeispiele:

Ausführungsbeispiel 1:
   Bausatz für Paneele umfassend oder bestehend aus
   - einem Paneelrahmen und
   - einem Paneelverbinder,
   dadurch gekennzeichnet, dass der Paneelrahmen eine Ausnehmung aufweist, in welche der Paneelverbinder einsetzbar ist und der Paneelverbinder eine erste 10 und eine zweite Seitenfläche 12, eine erste Oberfläche 14 und eine zweite Oberfläche 16 sowie mindestens eine Durchgangsbohrung 20, 22, 24 aufweist.
Ausführungsbeispiel 2:
   Paneelverbinder für einen Bausatz nach Ausführungsbeispiel 1,
   dadurch gekennzeichnet, dass der Paneelverbinder eine zur ersten Seitenfläche 10 abfallende Fläche 18 aufweist.
Ausführungsbeispiel 3:
   Paneelverbinder nach Ausführungsbeispiel 2,
   dadurch gekennzeichnet, dass die Durchgangsbohrung(en) 20, 22, 24 Längsachse(n) aufweist oder aufweisen und die Längsachse(n) entlang einer ersten Symmetrieebene 26 verläuft bzw. verlaufen.
Ausführungsbeispiel 4:
   Paneelverbinder nach Ausführungsbeispiel 2,
   dadurch gekennzeichnet, dass die Längsachsen der Durchgangsbohrungen 20, 22, 24 senkrecht zur zweiten Oberfläche 16 verlaufen.
Ausführungsbeispiel 5:
   Paneelverbinder nach Ausführungsbeispiel 2 oder 3,
   dadurch gekennzeichnet, dass eine der Durchgangsbohrungen 24 als Gewindebohrung ausgeführt ist.
Ausführungsbeispiel 6:
   Paneelverbinder nach einem der Ausführungsbeispiele 2 bis 5,
   dadurch gekennzeichnet, dass sich eine der Durchgangsbohrungen 20 auf der abfallenden Fläche 18 befindet.
Ausführungsbeispiel 7:
   Paneelverbinder nach einem der Ausführungsbeispiele 2 bis 6,
   dadurch gekennzeichnet, dass die sich auf der abfallenden Fläche 18 befindende Durchgangsbohrung 20 eine Absenkung aufweist, die sich an die abfallende Fläche 18 anschließt, und die von der zweiten Oberfläche 16 ausgehende Durchgangsbohrung 22 eine Erweiterung aufweist, welche sich an die zweite Oberfläche 16 anschließt.
Ausführungsbeispiel 8:
   Paneelverbinder nach einem der Ausführungsbeispiele 2 bis 7,
   dadurch gekennzeichnet, dass die Gewindebohrung 24 eine Absenkung aufweist, die sich an die erste Oberfläche 14 anschließt.
Ausführungsbeispiel 9:
   Paneelverbinder 80 nach einem der Ausführungsbeispiele 2 bis 8,
   dadurch gekennzeichnet, dass der Paneelverbinder 80 eine zweite Symmetrieebene 32, zwei abfallende Flächen 18, 36 und fünf Durchgangsbohrungen 20, 22, 24, 28, 30 aufweist.
Ausführungsbeispiel 10:
   Paneelverbinder 80 nach Ausführungsbeispiel 9,
   dadurch gekennzeichnet, dass die Längsachse der Gewindebohrung 24 entlang einer Schnittachse 34 der beiden Symmetrieebenen 26, 32 verläuft.
Ausführungsbeispiel 11:
   Paneelverbinder 80 nach Ausführungsbeispiel 9 oder 10,
   dadurch gekennzeichnet, dass die sich auf der ersten Oberfläche 14 befindlichen Durchgangsbohrungen 22, 28 und die sich auf den abfallenden Flächen 18, 36 befindlichen Durchgangsbohrungen 20, 30 jeweils denselben Abstand von der zweiten Symmetrieebene 32 und jeweils die Merkmale nach Ausführungsbeispiel 7 aufweisen.
Ausführungsbeispiel 12:
   Erster Paneelverbinder 82 nach einem der Ausführungsbeispiele 9 bis 11,
   dadurch gekennzeichnet, dass der zweite Paneelverbinder 82 eine konzentrisch zur Schnittachse 34 der ersten und der zweiten Symmetrieebene 26, 32 verlaufende und von der ersten Oberfläche 14 ausgehende Ausnehmung 37 aufweist, die sich über die gesamte Breite b des ersten Paneelverbinders 82 erstreckt.
Ausführungsbeispiel 13:
   Zweiter Paneelverbinder 84 nach einem der Ausführungsbeispiele 2 bis 8,
   dadurch gekennzeichnet, dass der zweite Paneelverbinder 84 eine erste 44 und eine zweite Oberfläche 46 sowie eine Ausnehmung 38 aufweist, welche sich von der ersten Seitenfläche 10 in Richtung einer zweiten Seitenfläche 42 über die gesamte Breite b des zweiten Paneelverbinders 84 erstreckt und von der zweiten Oberfläche 46 ausgeht.
Ausführungsbeispiel 14:
   Dritter Paneelverbinder 86 nach einem der Ausführungsbeispiele 2 bis 8,
   dadurch gekennzeichnet, dass der dritte Paneelverbinder 86 zwei abfallende Flächen 18, 36, zwei Seitenflächen 10, 13, vier Durchgangsbohrungen 22, 24, 28, 30, eine erste 50 und eine zweite 52 Oberfläche sowie eine Gewindebohrung 24 und eine Ausnehmung 48 aufweist, die sich über die gesamte Breite b des dritten Paneelverbinders 86 erstreckt und an die erste Oberfläche 50 angrenzt.
Ausführungsbeispiel 15:
   Vierter Paneelverbinder 88 nach einem der Ausführungsbeispiele 2 bis 8,
   dadurch gekennzeichnet, dass der vierte Paneelverbinder eine erste 60 und eine zweite 62 Oberfläche sowie eine Ausnehmung 64 aufweist, welche sich über die gesamte Breite b des vierten Paneelverbinders 88 erstreckt und an die erste Oberfläche 60 angrenzt.
Ausführungsbeispiel 16:
   Fünfter Paneelverbinder 90 nach einem der Ausführungsbeispiele 2 bis 8,
   dadurch gekennzeichnet, dass der fünfte Paneelverbinder 90 eine erste 54 und eine zweite Oberfläche 56 sowie eine Ausnehmung 58 aufweist, welche sich über die gesamte Breite b des fünften Paneelverbinders 90 erstreckt und an die zweite Oberfläche 56 angrenzt.
Ausführungsbeispiel 17:
   Zapfen 92 für einen Bausatz nach Ausführungsbeispiel 1 mit einem im Wesentlichen quaderförmigen Grundkörper 94, der eine erste Oberfläche 66 und eine erste Seitenfläche 68 aufweist, mindestens einer Durchgangsbohrung 70 und mindestens einer Stange 72,
   dadurch gekennzeichnet, dass die Durchgangsbohrung 70 eine Längsachse aufweist, welche innerhalb einer ersten Symmetrieebene 78 des Grundkörpers 94 und senkrecht zur ersten Oberfläche 66 verläuft, die Stange 72 eine Längsachse aufweist, die innerhalb der ersten Symmetrieebene 78 des Quaders und senkrecht zur ersten Seitenfläche 68 verläuft, und der Zapfen 92 mittels der Stange 72 und den Durchgangslöchern 22, 28 mit den Paneelverbindern 80, 82, 84, 86, 88, 90 form- oder reibschlüssig verbindbar ist.
Ausführungsbeispiel 18:
   Erstes Koppelsystem umfassend oder bestehend aus
   - einem ersten Paneelverbinder 82 nach Ausführungsbeispiel 12 und
   - einem zweiten Paneelverbinder 84 nach Ausführungsbeispiel 13,
   dadurch gekennzeichnet, dass die Ausnehmung 37 des ersten Paneelverbinders 82 zur Ausnehmung 38 des zweiten Paneelverbinders 84 komplementär ist, die Oberflächen 14, 16 des ersten Paneelverbinders 82 mit den Oberflächen 44, 46 des zweiten Paneelverbinders 84 beim Verbinden der Paneelverbinder 82, 84 über die Ausnehmungen 37, 38 fluchten, die Ausnehmung 38 des zweiten Paneelverbinders 84 eine Auflagefläche 38' für Paneelrahmen bildet und die Paneelverbinder 82, 84 mittels einer Schraube oder Gewindestange, welche in die Gewindelöcher 24 einschraubbar sind, verbindbar sind.
Ausführungsbeispiel 19:
   Zweites Koppelsystem umfassend oder bestehend aus
      - einem ersten Paneelverbinder 82 nach Ausführungsbeispiel 12 und
      - einem dritten Paneelverbinder 86 nach Ausführungsbeispiel 14,
   dadurch gekennzeichnet, dass die Ausnehmung 37 des ersten Paneelverbinders 82 komplementär zur Ausnehmung 48 des dritten Paneelverbinders 86 ist, die Oberflächen 14, 16 des ersten Paneelverbinders 82 mit den Oberflächen 50, 52 des dritten Paneelverbinders 86 beim Verbinden der Paneelverbinder über die Ausnehmungen 37, 48 fluchten, die Ausnehmung 48 des dritten Paneelverbinders 86 zwei Auflageflächen 48', 48" für Paneelrahmen bildet und die Paneelverbinder 82, 86 mittels einer Schraube oder Gewindestange, welche in die Gewindelöcher 24 einschraubbar sind, verbindbar sind.
Ausführungsbeispiel 20:
   Drittes Koppelsystem umfassend oder bestehend aus
   - einem vierten Paneelverbinder 88 nach Ausführungsbeispiel 15 und
   - einem fünften Paneelverbinder 90 nach Ausführungsbeispiel 16,
   dadurch gekennzeichnet, dass die Ausnehmung 64 des vierten Paneelverbinders 88 komplementär zur Ausnehmung 58 des fünften Paneelverbinders 90 ist, die Oberflächen 60, 62 des vierten Paneelverbinders 88 mit den Oberflächen 54, 56 des fünften Paneelverbinders 90 beim Verbinden der Paneelverbinder 88, 90 über die Ausnehmungen 58, 64 fluchten, die Paneelverbinder 88, 90 einen Winkel von 0 bis 180°, insbesondere 90°, einschließen und mittels einer Schraube oder Gewindestange, welche in die Gewindelöcher 24 einschraubbar sind, verbindbar sind.
Ausführungsbeispiel 21:
   Bausatz nach Ausführungsbeispiel 1,
   dadurch gekennzeichnet, dass der Bausatz weiterhin Profile zur Versteifung und/oder zur Aufnahme weiterer Bausatzelemente wie Rollos, Lamellen, Stoffe oder Türelemente umfasst und dass die Profile an den Paneelverbindern und/oder an den Koppelsystemen befestigbar sind.

## Patentansprüche

1. Koppelsystem umfassend oder bestehend aus
- einem ersten Paneelverbinder (82)
und
- einem zweiten Paneelverbinder (84),
wobei die Paneelverbinder (82, 84) jeweils eine erste (10) und eine zweite Seitenfläche (12), eine erste Oberfläche (14) und eine zweite Oberfläche (16) sowie mindestens eine Durchgangsbohrung (20, 22, 24) und eine zur ersten Seitenfläche (10) abfallende Fläche (18) aufweisen,
**dadurch gekennzeichnet, dass**
der erste Paneelverbinder (82) zwei Symmetrieebenen (26, 32), eine weitere abfallende Fläche (36), fünf Durchgangsbohrungen (20, 22, 24, 28, 30) und eine konzentrisch zur Schnittachse (34) der ersten und der zweiten Symmetrieebene (26, 32) verlaufende und von der ersten Oberfläche (14) ausgehende Ausnehmung (37) aufweist, die sich über die gesamte Breite (b) des ersten Paneelverbinders (82) erstreckt,
der zweite Paneelverbinder (84) eine erste (44) und eine zweite Oberfläche (46) sowie eine Ausnehmung (38) aufweist, welche sich von der ersten Seitenfläche (10) in Richtung einer zweiten Seitenfläche (42) über die gesamte Breite (b) des zweiten Paneelverbinders (84) erstreckt und von der zweiten Oberfläche (46) ausgeht,
jeweils eine der Durchgangsbohrungen (24) als Gewindebohrung ausgeführt ist,
und
die Ausnehmung (37) des ersten Paneelverbinders (82) zur Ausnehmung (38) des zweiten Paneelverbinders (84) komplementär ist, die Oberflächen (14, 16) des ersten Paneelverbinders (82) mit den Oberflächen (44, 46) des zweiten Paneelverbinders (84) beim Verbinden der Paneelverbinder (82, 84) über die Ausnehmungen (37, 38) fluchten, die Ausnehmung (38) des zweiten Paneelverbinders (84) eine Auflagefläche (38') für Paneelrahmen bildet und die Paneelverbinder (82, 84) mittels einer Schraube oder Gewindestange, welche in die Gewindelöcher (24) einschraubbar sind, verbindbar sind.

2. Koppelsystem umfassend oder bestehend aus
- einem ersten Paneelverbinder (82)
und
- einem dritten Paneelverbinder (86),
wobei die Paneelverbinder (82, 86) jeweils eine erste (10) und eine zweite Seitenfläche (12), eine erste Oberfläche (14, 50) und eine zweite Oberfläche (16, 52) sowie mindestens eine Durchgangsbohrung (20, 22, 24) und eine zur ersten Seitenfläche (10) abfallende Fläche (18) aufweisen,
**dadurch gekennzeichnet, dass**
der erste Paneelverbinder (82) zwei Symmetrieebenen (26, 32), eine weitere abfallende Fläche (36), fünf Durchgangsbohrungen (20, 22, 24, 28, 30) und eine konzentrisch zur Schnittachse (34) der ersten und der zweiten Symmetrieebene (26, 32) verlaufende und von der ersten Oberfläche (14) ausgehende Ausnehmung (37) aufweist, die sich über die gesamte Breite (b) des ersten Paneelverbinders (82) erstreckt,
der dritte Paneelverbinder (86) zwei abfallende Flächen (18, 36), zwei Seitenflächen (10, 13), vier Durchgangsbohrungen (22, 24, 28, 30), eine erste (50) und eine zweite (52) Oberfläche sowie eine Ausnehmung (48) aufweist, die sich über die gesamte Breite (b) des dritten Paneelverbinders (86) erstreckt und an die erste Oberfläche (50) angrenzt,
jeweils eine der Durchgangsbohrungen (24) als Gewindebohrung ausgeführt ist,
und
die Ausnehmung (37) des ersten Paneelverbinders (82) komplementär zur Ausnehmung (48) des dritten Paneelverbinders (86) ist, die Oberflächen (14, 16) des ersten Paneelverbinders (82) mit den Oberflächen (50, 52) des dritten Paneelverbinders (86) beim Verbinden der Paneelverbinder über die Ausnehmungen (37, 48) fluchten, die Ausnehmung (48) des dritten Paneelverbinders (86) zwei Auflageflächen (48', 48") für Paneelrahmen bildet und die Paneelverbinder (82, 86) mittels einer Schraube oder Gewindestange, welche in die Gewindelöcher (24) einschraubbar sind, verbindbar sind.

3. Koppelsystem umfassend oder bestehend aus
- einem vierten Paneelverbinder (88)
und
- einem fünften Paneelverbinder (90),
wobei die Paneelverbinder (88, 90) jeweils eine erste (10) und eine zweite Seitenfläche (12), eine erste Oberfläche (60, 54) und eine zweite Oberfläche (62, 56) sowie mindestens eine Durchgangsbohrung (20, 22, 24) und eine zur ersten Seitenfläche (10) abfallende Fläche (18) aufweisen,
**dadurch gekennzeichnet, dass**
der vierte Paneelverbinder (88) eine erste (60) und eine zweite (62) Oberfläche sowie eine Ausnehmung (64) aufweist, welche sich über die gesamte Breite (b) des vierten Paneelverbinders (88) erstreckt und an die erste Oberfläche (60) angrenzt,
der fünfte Paneelverbinder (90) eine erste (54) und eine zweite Oberfläche (56) sowie eine Ausnehmung (58) aufweist, welche sich über die gesamte Breite (b) des fünften Paneelverbinders (90) erstreckt und an die zweite Oberfläche (56) angrenzt
jeweils eine der Durchgangsbohrungen (24) als Gewindebohrung ausgeführt ist,
und
die Ausnehmung (64) des vierten Paneelverbinders (88) komplementär zur Ausnehmung (58) des fünften Paneelverbinders (90) ist, die Oberflächen (60, 62) des vierten Paneelverbinders (88) mit den Oberflächen (54, 56) des fünften Paneelverbinders (90) beim Verbinden der Paneelverbinder (88, 90) über die Ausnehmungen (58, 64) fluchten, die Paneelverbinder (88, 90) einen Winkel von 0 bis 180°, insbesondere 90°, einschließen und mittels einer Schraube oder Gewindestange, welche in die Gewindelöcher (24) einschraubbar sind, verbindbar sind.

4. Koppelsystem nach einem der Ansprüche 1, 2 oder 3, **dadurch gekennzeichnet, dass** die Durchgangsbohrung(en) (20, 22, 24) des einen oder beider Paneelverbinder Längsachse(n) aufweist oder aufweisen und die Längsachse(n) entlang einer ersten Symmetrieebene (26) verläuft bzw. verlaufen.

5. Koppelsystem nach einem der Ansprüche 1, 2 oder 3, **dadurch gekennzeichnet, dass** die Längsachsen der Durchgangsbohrungen (20, 22, 24) des einen oder beider Paneelverbinder senkrecht zur zweiten Oberfläche (16, 52, 56, 62) verlaufen.

6. Koppelsystem nach einem der Ansprüche 1 bis 5, **dadurch gekennzeichnet, dass** sich eine der Durchgangsbohrungen (20) des einen oder beider Paneelverbinder auf der abfallenden Fläche (18) befindet.

7. Koppelsystem nach einem der Ansprüche 1 bis 6, **dadurch gekennzeichnet, dass** die sich auf der abfallenden Fläche (18) befindende Durchgangsbohrung (20) des einen oder beider Paneelverbinder eine Absenkung aufweist, die sich an die abfallende Fläche (18) anschließt, und die von der zweiten Oberfläche (16, 52, 56, 62) ausgehende Durchgangsbohrung (22) eine Erweiterung aufweist, welche sich an die zweite Oberfläche (16, 52, 56, 62) anschließt.

8. Koppelsystem nach einem der Ansprüche 1 bis 7, **dadurch gekennzeichnet, dass** die Gewindebohrung (24) des einen oder beider Paneelverbinder eine Absenkung aufweist, die sich an die erste Oberfläche (14, 50, 54, 60) anschließt.

9. Koppelsystem nach Anspruch 1 oder 2 oder einem der Ansprüche 4 bis 8, **dadurch gekennzeichnet, dass** die Längsachse der Gewindebohrung (24) des Paneelverbinders (82) entlang einer Schnittachse (34) der beiden Symmetrieebenen (26, 32) verläuft.

10. Koppelsystem nach Anspruch 1 oder 2 oder einem der Ansprüche 4 bis 9, **dadurch gekennzeichnet, dass** die sich auf der ersten Oberfläche (14) des Paneelverbinders (82) befindlichen Durchgangsbohrungen (22, 28) und die sich auf den abfallenden Flächen (18, 36) befindlichen Durchgangsbohrungen (20, 30) jeweils denselben Abstand von der zweiten Symmetrieebene (32) und jeweils die Merkmale nach Anspruch 7 aufweisen.

11. Bausatz für Paneele umfassend oder bestehend aus
b) einem Paneelrahmen und
c) - einem ersten (82) und einem zweiten Paneelverbinder (84) für ein Koppelsystem nach Anspruch 1 oder einem der Ansprüche 4 bis 10, und/oder
- einem ersten (82) und einem dritten Paneelverbinder (86) für ein Koppelsystem nach Anspruch 2 oder einem der Ansprüche 4 bis 10, und/oder
- einem vierten (88) und einem fünften Paneelverbinder (90) für ein Koppelsystem nach einem der Ansprüche 3 bis 8,
**dadurch gekennzeichnet, dass** der Paneelrahmen eine Ausnehmung aufweist, in welche ein erster, zweiter, dritter, vierter oder fünfter Paneelverbinder (82, 84, 86, 88, 90) einsetzbar ist.

12. Bausatz nach Anspruch 11, **dadurch gekennzeichnet, dass** der Bausatz weiterhin Profile zur Versteifung und/oder zur Aufnahme weiterer Bausatzelemente wie Rollos, Lamellen, Stoffe oder Türelemente umfasst und dass die Profile an den Paneelverbindern und/oder an den Koppelsystemen befestigbar sind.

13. Paneelzusammenstellung umfassend oder bestehend aus zwei Paneelen mit Paneelrahmen sowie jeweils
- einem ersten (82) und einem zweiten Paneelverbinder (84) für ein Koppelsystem nach Anspruch 1 oder einem der Ansprüche 4 bis 10, und/oder
- einem ersten (82) und einem dritten Paneelverbinder (86) für ein Koppelsystem nach Anspruch 2 oder einem der Ansprüche 4 bis 10, und/oder
- einem vierten (88) und einem fünften Paneelverbinder (90) für ein Koppelsystem nach einem der Ansprüche 3 bis 8,
wobei der Paneelrahmen eine Ausnehmung aufweist, in welche ein erster, zweiter, dritter, vierter oder fünfter Paneelverbinder (82, 84, 86, 88, 90) einsetzbar ist, und wobei die zwei Paneelen durch ein Koppelsystem nach einem der Ansprüche 1 bis 10 miteinander verbunden sind.
